# EUROPEAN PATENT APPLICATION

(11) **EP 4 753 293 A1**
(43) Date of publication of application: **03.06.2026**
(21) Application number: 24216901.9
(22) Date of filing: 02.12.2024
(51) Int. Cl.: H04W 4/021, H04W 4/40, H04W 4/80, H04W 4/44, H04W 4/02

(54) **PREVENTING COLLISION IN AN AISLE OF A WAREHOUSE**

(71) Applicant: Lopos BV, 9000 Gent (BE)
(72) Inventor: Jooris, Bart, 8460 Oudenburg (BE); Rossey, Jen, 9070 Destelbergen (BE)
(74) Representative: Ipsilon Belgium

(57) **Abstract**

A system (1) for preventing collision of a vehicle (100) with a neighbouring vehicle (200) in an aisle (300) of a warehouse, comprising:
- aisle wireless tags (30;31;32); and
- at the vehicle (100):
o a wireless tag transceiver (11) to determine a position (2) of the vehicle in the aisle (300);
o a wireless vehicle transceiver (12) to receive a neighbouring position (4) of the neighbouring vehicle (200); and
o a proximity assessing unit (13) comprising an Ultra-Wide Band interface to determine a distance (5) between two vehicles and their relative speeds; and to generate a stimulus, in function of the position (2) and the neighbouring position (4), and/or in function of the distance (5), and/or in function of the speed of the vehicles.

## Description

### Technical Field

The present invention generally relates, amongst others, to a system for preventing collision of a vehicle with a neighbouring vehicle in an aisle of a warehouse. More particularly, it relates to a system and methods for avoiding false collision warnings when two vehicles are active in two different aisles of a warehouse, preferably within the framework of very narrow aisles in a warehouse.

### Background

In the ever-evolving landscape of warehouses and storage facilities, optimizing space while maintaining operational efficiency and increasing safety of the operators is crucial. Aisle racking, such as for example narrow aisle racking, is a highly space efficient pallet storage system. It enables businesses to achieve increased storage capacity within a warehouse and is the perfect choice for areas where for example floor space is limited as it offers a balance between space utilization and accessibility. Efficient access to every pallet for, for example, picking, processing, or retrieval remains possible. For example, a high-bay warehouse is a facility with tall racking units, for example more than 5 meters high or more than 7 meters high, that leverage the height of the building to maximise storage capacity.

A warehouse comprising a plurality of Very Narrow Aisles, also referred to a VNAs, is a form of high-bay warehouse wherein the aisles are so narrow that two operators are not able to pass one another in the aisle. In this type of high-bay warehouse, vehicles and humans are not permitted to be in the same aisle at the same time as warehouses are required to adhere to safety guidelines for protection of their staff.

On the other hand, companies are constantly faced with rising demand for increased throughput rates and more flexibility. To be able to move the greatest volume of goods in the shortest time in narrow aisles, vehicles, such as for example trucks, vertical order pickers and/or forklifts, use for example various assistance systems, as well as optional navigation systems. These systems support the operator and indicate the exact position of particular goods in the warehouse. Decisive for an increased throughput rate, amongst other things, is that for example the forklifts can move and lift at the same time. For example, a pallet can be moved very quickly at considerable height for example in a diagonal direction and at for example high speed. Powerful drive and lift engines can be designed to enable forklifts to move off and lift at the same time, so that the required location in a racking of a warehouse is reached quickly.

However, companies have found that they may be unable to meet the rising demands as they are not permitted to use more than one vehicle in the same aisle at the same time. Indeed, when two vehicles are moving towards each other at relative speed, a large protective field range must be in place around each vehicle to ensure that the vehicles can be brought safely to a stop to prevent their collision, even when traveling at full speed. If two vehicles are present in the same aisle, the aisle must be divided into two sections, and only one vehicle must be present in each section at all time.

Driving in narrow aisles and lifting to elevated heights is not an easy job. Especially when working at high altitude, the operator has limited visibility on the ground below. Every type of forklift truck and materials handling vehicle has a blind spot, i.e. a space surrounding the vehicle the driver or operator cannot see. Due to these invisible spaces, vehicles and/or objects can be damaged or people can become involved in an accident, whether that is with for example a turning forklift or one that is reversing. Operators need to be properly trained when working in these demanding conditions to prevent collision with another vehicle or operator present for example in the same aisle but working at a higher or lower height.

Most of the existing solutions for monitoring a position of a vehicle in an aisle rely on detection systems which are mounted onto or integrated into a vehicle. The detection systems for example comprise one or more cameras to allow an operator to visualize if another vehicle is present above or under his vehicle. If it is the case, and if or before a collision is imminent, the operator can manually modify the position of the vehicle he is operating to prevent collision. This manual intervention can happen too late or may not be appropriate to the situation, thereby jeopardizing safety. Another drawback of detection systems relying on cameras is that cameras are limited to certain Lines of Sight, i.e. unobstructed views from the camera's position to the target of the camera. Additionally, the prior art detection systems are electrically powered, sometimes requiring electrical cables to hang from for example the ceiling of the warehouse to be connected to each vehicle. The cables hanging in the aisle form an additional hazard for accidents for the vehicles. Another drawback is that a single detection system can cost several thousand euros. Providing an individual detection system for each vehicle drastically increases the costs needed for purchase and repair and maintenance of the vehicles.

### Summary

Other solutions for increasing proximity awareness of devices in warehouses, and more particularly in narrow aisles, also exist. For example, radio technologies can be used to allow precise location determination and tracking of vehicles in the warehouse. The radio technologies, such as for example Ultra-Wide Band, also known as UWB, are indeed used for example for real-time determination of locations due to their precision and reliability. UWB technology further additionally provides effective proximity sensing and operator safety solutions. By equipping vehicles and/or workers with UWB-enabled devices or badges, companies can monitor their location and movement in real-time. UWB-based systems can detect potential collisions between operators and machinery and/or between machinery and machinery, issuing timely warnings to prevent accidents. Moreover, UWB technology allows for the creation of safety zones and controlled access areas, ensuring the safe interaction of operators with hazardous equipment or restricted zones. This helps enhance workplace safety, reduce accidents, and protect employees from potential hazards. This way, safety of the vehicles is increased as they are warned of the presence of neighbouring vehicles in their vicinity. However, in warehouses for example, and particularly in narrow aisles, warnings and/or alarms may be generated when two vehicles are physically close to each other in the warehouse, even though they are not located in the same aisle. The use of radio technologies, for example of UWB, may then lead to the generation of false positive alarms warning a vehicle or an operator of the presence of neighbouring vehicles and/or operators in their immediate vicinity to prevent a collision, while the neighbouring vehicles and/or operators are not physically present in the same aisle as the vehicle or the operator. There is not risk of collision for example between two vehicles when the two vehicles are not located in the same aisle. The generated alarms or warnings are therefore irrelevant and misleading to vehicles and/or operators. This completely jeopardizes the goal of increasing safety in the warehouse.

It remains challenging to accurately determine and monitor a relative position of a vehicle with respect to a position of another vehicle in the same warehouse. More particularly, it remains challenging to accurately prevent two vehicles from colliding when both vehicles are in the same aisle. More particularly, it remains challenging to reliably prevent a collision between two vehicles located in the same aisle of a warehouse. More particularly, it remains challenging to only generate and spread reliable warnings or reliable alarms indicating imminent or possible collision, between for example two vehicles, when the two vehicles are in the same aisle. More particularly, it remains challenging to reliably prevent the generation and the spreading of warnings or alarms falsely indicating imminent or possible collision, for example when two vehicles are close to each other within the warehouse but when the two vehicles are not present in the same aisle.

There is a need for a system which allows two vehicles to be present in the same aisle of a warehouse while minimizing the risk for accidents to the operators and the vehicles.

There is also a need for a system which prevents an alarm or a warning for possible collision from being wrongly generated when two vehicles are close or coming close to each other, while not being present in the same aisle but being present in neighbouring aisles in the warehouse.

Amongst others, it is thus an object of embodiments of the present invention to propose a system and related computer-implemented methods which do not show the inherent shortcomings of the prior art.

Amongst others, it is an object of embodiments of the present invention to propose computer-implemented methods and a system to reliably and accurately determine a position of a vehicle within a warehouse and with respect to a position of another vehicle in the same warehouse to be able to minimize the risk for collision between the two vehicles.

Amongst others, it is an object of embodiments of the present invention to propose computer-implemented methods and a system to increase the reliability of the generation of alarms or warning or other suitable stimuli for indicating a possible collision between two vehicles in a warehouse, by preventing the generation and the spreading of warnings or alarms falsely indicating imminent or possible collision between the two vehicles while the two vehicles are present in two different aisles.

The scope of protection sought for various embodiments of the invention is set out by the independent claims.

The embodiments and features described in this specification that do not fall within the scope of the independent claims, if any, are to be interpreted as examples useful for understanding various embodiments of the invention.

This object is achieved, according to a first example aspect of the present disclosure, by a system for preventing collision of a vehicle with a neighbouring vehicle in an aisle of a warehouse, the system comprising:
- a plurality of aisle wireless tags arranged along the aisle, wherein each aisle wireless tag is configured to transceive respective tag information; and
- at the vehicle:
   ∘ a wireless tag transceiver configured to receive the respective tag information of one or more aisle wireless tags and to determine a position of the vehicle in the aisle in function of the respective tag information;
   ∘ a wireless vehicle transceiver configured to receive a neighbouring position of the neighbouring vehicle; and
   ∘ a proximity assessing unit comprising an Ultra-Wide Band interface configured to determine, in function of the position of the vehicle and the neighbouring position of the neighbouring vehicle:
      ▪ a distance between the vehicle and the neighbouring vehicle; and
      ▪ a speed of the vehicle relative to a speed of the neighbouring vehicle; and
      wherein the proximity assessing unit is further configured to generate a stimulus, in function of the position of the vehicle and the neighbouring position of the neighbouring vehicle, and/or in function of the distance, and/or in function of the speed of the vehicle relative to the speed of the neighbouring vehicle.

With the system according to the present disclosure, a relative position of a vehicle with respect to a position of another vehicle in the same warehouse can be determined and monitored. It becomes possible with the system according to the present disclosure to accurately prevent two vehicles from colliding when both vehicles are in the same aisle of the warehouse. It also becomes with the system according to the present disclosure possible to reliably prevent the generation and the spreading of warnings or alarms falsely indicating imminent or possible collision, for example when two vehicles are close to each other within the warehouse but when the two vehicles are not present in the same aisle. This way, the system according to the present disclosure allows two vehicles to be present in the same aisle of a warehouse while minimizing the risk for accidents to the operators and the vehicles. The system according to the present disclosure prevents an alarm or a warning falsely indicating imminent or possible collision between two vehicles in the same warehouse from being wrongly generated or spread when the two vehicles are close or coming close to each other, while not being present in the same aisle but being present in neighbouring aisles in the warehouse.

The system according to the present disclosure has a large impact on warehouse operations. Indeed, it becomes possible with the system according to the present disclosure to allow two vehicles to work simultaneously in a single aisle of the warehouse. This leads to maximum performance in the warehouse. Efficient access to every pallet in the warehouse for, for example, picking, processing, or retrieval is improved. Speed of access to every pallet in the warehouse for, for example, picking, processing, or retrieval is also improved. It becomes possible to further leverage the height of the building of the warehouse to maximise storage capacity as every pallet in the warehouse can be accessed faster. For example, an increased throughput rate can be achieved as forklifts can move and lift at the same time thanks to the system according to the present disclosure. For example, a pallet can be moved very quickly at considerable height for example in a diagonal direction and at for example high speed without risking colliding with another pallet or another forklift or another operator.

With the system according to the present disclosure, vehicles can quickly and safely move around the aisles of the warehouse, even for example when travelling at full speed, thereby lowering the occurrence of accidents. The safety of the vehicles and most importantly of the operators of the vehicles is greatly improved as collision between two vehicles is prevented, even when the two vehicles are present in the same aisle of the warehouse. The system according to the present disclosure regulates for example a speed of the forklifts according to the weight of the load or restricts the lift heights of the forklifts, thereby optimizing performance while minimizing the accident risk to the operator and/or other operators and/or other vehicles. The system according to the present disclosure helps drivers or operators to carry out their day-to-day tasks more safely by increasing awareness in all the areas they work in such as for example the warehouse, production and loading yard environments. The system according to the present disclosure provides the driver or operator of a vehicle with accurate information about the space behind and to the side of the vehicle, i.e. blind spots and other spaces surrounding the vehicle the driver or operator cannot see. Having this level of visibility significantly increases site safety as well and providing reassurance to the operator of their immediate surroundings. With the system according to the present disclosure, the operators can dynamically managing the drive speed of a vehicle in relation to the level of hazard around the vehicle.

This way, the system according to the present disclosure makes sure that a long enough stopping distance for the vehicle can be guaranteed to avoid collision. A collision between two vehicles is prevented by configuring one or both of the vehicles to slow down or even stop moving when the proximity assessing unit according to the present disclosure of the vehicle detects an imminent collision between the vehicle and a neighbouring vehicle, which could be located in the same aisle as the vehicle. Alternatively, a collision between two vehicles is prevented by configuring one or both of the vehicles to generate a stimulus alerting the operator of the vehicle to slow down the vehicle or even immobilize the vehicle when the proximity assessing unit according to the present disclosure of the vehicle detects an imminent collision between the vehicle and a neighbouring vehicle, which could be located in the same aisle as the vehicle. Alternatively, when the proximity assessing unit according to the present disclosure of a vehicle detects an imminent collision between the vehicle and a neighbouring vehicle, which could be located in the same aisle as the vehicle, a collision between the two vehicles is prevented by either configuring one or both of the vehicles to slow down or even stop moving and by configuring one or both of the vehicles to generate a stimulus alerting the operator of the vehicle to slow down the vehicle or even immobilize the vehicle. For example, the system according to the present disclosure first gives an operator a warning, then secondly, the operator gets further help with steady increase of braking force to the vehicle until the vehicle comes to a stop.

This way, unwanted, unallowed and/or potentially dangerous or hazardous situations for the vehicles in the warehouse may be avoided by improving proximity awareness of each of the vehicles. The system according to the present disclosure generates one or more stimuli which can be used for ensuring distancing between two vehicles in the warehouse, allowing or refusing admittance or passage of a vehicle in an aisle of the warehouse wherein collision with a vehicle already present in the warehouse would happen, allowing geofencing, and/or defining safety zones in the surroundings of the vehicles. The purpose of the system according to the present disclosure is to track movement of neighbouring vehicles or humans in proximity with the vehicle onto which the system is mounted or integrated and to efficiently identify contexts which require the generation of a stimulus to alert an operator of the vehicle. This way, it becomes very easy for the operator to for example respect a physical distance at all times with neighbouring vehicles. Additionally, the stimulus generated by the system according to the present disclosure is generated depending on parameters of the vehicle and of neighbouring vehicles. This way, the system according to the present disclosure can dynamically generate a stimulus in function of the context faced in real-time by the vehicle, wherein the context is identified by the vehicle from vehicle parameters and neighbouring vehicle parameters. A stimulus in the context of the present disclosure is for example an audible stimulus, for example an alarm or a warning sound. Alternatively, a stimulus in the context of the present disclosure is for example an visual stimulus, for example a light or a flashing light, or an visual indication on a visual display of the vehicle.

The system according to the present disclosure is for example a system which can be mounted onto a vehicle. For example, the system according to the present disclosure is a small, handy, portable system which can be for example attached securely or in a removable manner on a vehicle. Alternatively, the system according to the present disclosure is for example a system which integrated into the vehicle. The system according to the present disclosure is configured to communicate with neighbouring systems which are similar to the system according to the present disclosure. Alternatively, the system according to the present disclosure is configured to communicate with any other device comprising suitable communication means to interact with the system according to the present disclosure. The system according to the present disclosure is self-sufficient in the sense that it is not necessary to download for example a mobile application on for example a mobile communication device to be able to interact with the system according to the present disclosure.

The system according to the present disclosure comprises one proximity assessing unit. A proximity assessing unit according to the present disclosure comprises an Ultra-Wide Band technology or a UWB interface for accurate estimations of the distance and/or the orientation of the vehicle with respect to neighbouring vehicles. In other words, a proximity assessing unit according to the present disclosure monitors a permanent protective field for the vehicle comprising the proximity assessing unit. UWB is much more accurate and faster than Bluetooth for determination of distances between the vehicle and neighbouring vehicles. With Bluetooth, the margin of error in the determination of the distance is for example in the range of 2 to 5 meters, while with UWB it is for example a maximum of 15 cm. This means the system according to the present disclosure can accurately identify or determine the difference between 1.50m and 1.65m, whereas Bluetooth only recognizes the difference between 1.5m and 3.5m at best. If for example the system according to the present disclosure must generate a stimulus to ensure a minimum physical separation of 1.65m between the vehicle and a neighbouring vehicle, with UWB, it is certain that presence of a neighbouring vehicle within 1.5m of the vehicle will be signaled to keep more distance by the stimulus which can for example be sound and vibration, an LED light, etc. Ultra-wideband is a technology for transmitting information across a wide bandwidth such as for example larger than 500 MHz. This allows for the transmission of a large amount of signal energy without interfering with conventional narrowband and carrier wave transmission in the same frequency band. Alternatively, UWB is understood in the context of the present disclosure as an antenna transmission for which emitted signal bandwidth exceeds the lesser of 500 MHz or 20% of the arithmetic center frequency. Thus, pulse-based systems - where each transmitted pulse occupies the UWB bandwidth or an aggregate of at least 500 MHz of narrow-band carrier; for example, orthogonal frequency-division multiplexing - can access the UWB spectrum under the rules. In other words, UWB transmissions transmit information by generating radio energy at specific time intervals and occupying a large bandwidth, thus enabling pulse-position or time modulation. The information can also be modulated on UWB signals by encoding for example the polarity of the pulse and/or its amplitude and/or by using orthogonal pulses. For example, UWB pulses can be sent sporadically at relatively low pulse rates to support time or position modulation but can also alternatively be sent at rates up to the inverse of the UWB pulse bandwidth. An UWB radio system can for example be used to determine the "time of flight" of the transmission at various frequencies. This helps overcome multipath propagation, since some of the frequencies have a line-of-sight trajectory, while other indirect paths have longer delays. This allows to measure distances with high resolution and accuracy. UWB's centimeter-level accuracy is valuable in applications in which using traditional methods may be unsuitable, such as in indoor environments, for example warehouses, where GPS precision may be hindered. Its low power consumption ensures minimal interference and allows for coexistence with existing infrastructure. UWB performs well in challenging environments with its immunity to multipath interference, providing consistent and accurate positioning. In logistics, UWB increases inventory tracking efficiency, reducing losses and optimizing operations. In manufacturing, UWB is used for streamlining inventory management and enhancing production efficiency through accurate tracking of materials and tools. UWB supports route planning, fleet management, and vehicle security in transportation systems. Alternatively, the system according to the present disclosure comprises several proximity assessing units. The proximal sensing range of the proximity assessing unit is defined as an area comprised between an outer sensing range boundary and the proximity assessing unit. The outer sensing range boundary corresponds to positions from which presence is detectable by the proximity assessing unit and for which the distance between the proximity assessing unit and the positions is the furthest allowable sensing distance for the proximity assessing unit. The outer sensing range boundary is for example defining a section of a circle or a circle with a radius corresponding to a furthest allowable sensing distance to the proximity assessing unit. The proximity sensing range extends for example 10 meters, 2 meters, or 1 meter, or 50 centimetres, or 40 centimetres, or 30 centimetres from the proximity assessing unit, i.e. the distance from which the apparatus will generate stimuli. The furthest allowable sensing distance may be the furthest sensing distance of the proximity assessing unit. Alternatively, the furthest allowable sensing distance is programmed in the proximity assessing unit. In the context of the present disclosure, a neighbouring vehicle is for example identical to the vehicle. Alternatively, a neighbouring vehicle comprises any suitable communication means which are configured to allow the neighbouring vehicle to communicate with the system according to the present disclosure.

The aisle wireless tags according to the present disclosure are arranged along the aisle, and each aisle wireless tag is configured to transceive respective tag information. The respective tag information of an aisle wireless tag for example comprises a position of the aisle wireless tag in the aisle. Alternatively, the respective tag information of an aisle wireless tag for example comprises information about an area or a zone in which the aisle wireless tag is located. The aisle wireless tags are for example mounted onto the racks of the warehouse, for example at the ground level and/or along a height direction of the aisle. Alternatively, the aisle wireless tags are for example located on the ground of the aisle. Alternatively, the aisle wireless tags are for example hanging from the ceiling of the aisle. One or more aisle wireless tags are for example positioned at an entrance and/or at an exit of an aisle. One or more aisle wireless tags are for example spread in the aisle, along a longitudinal direction of the aisle and/or along a height direction of the aisle. One or more aisle wireless tags are for example spread periodically along the aisle. Alternatively, one or more aisle wireless tags are spread arbitrarily along the aisle. For example, there could be a higher concentration of aisle wireless tags where there is a higher concentration of pallets in the aisle.

At the vehicle, the system according to the present disclosure comprises a wireless tag transceiver configured to receive the respective tag information of one or more aisle wireless tags and to determine a position of the vehicle in the aisle in function of the respective tag information. The position of the vehicle in the aisle is determined by receiving and interpreting respective tag information from an aisle wireless tag, and relying on the position of the aisle wireless tag in the aisle comprised in the respective tag information to determine therefrom a position of the vehicle in the aisle. For example, when the vehicle receives the respective tag information of one or more aisle wireless tags located at the entrance/exit of an aisle, the wireless tag transceiver determines that the vehicle is at positioned at the entrance/exit of the aisle.

At the vehicle, the system according to the present disclosure further comprises a wireless vehicle transceiver which receives a neighbouring position of the neighbouring vehicle in the warehouse. At the vehicle, the system according to the present disclosure further comprises a wireless vehicle transceiver which receives a neighbouring speed of the neighbouring vehicle in the warehouse. Alternatively, the wireless vehicle transceiver may receive a neighbouring position of the neighbouring vehicle in the warehouse and may transmit the position of the vehicle in the warehouse to the neighbouring vehicle. The neighbouring position of the neighbouring vehicle in the warehouse may be determined using the respective tag information of aisle wireless tags in the warehouse. Alternatively the neighbouring position of the neighbouring vehicle in the warehouse may be determined in any other suitable way.

Based on the position of the vehicle and on the neighbouring position of the neighbouring vehicle, the proximity assessing unit according to the present disclosure determine a distance between the vehicle and the neighbouring vehicle, and a speed of the vehicle relative to a speed of the neighbouring vehicle. The relative positions, the distance, the speed can be used to generate a stimulus to inform over a potential collision between the vehicle and thee neighbouring vehicle. For example, when the positions of the vehicle and the neighbouring vehicle are too close to each other in the same aisle, the proximity assessing unit generates a stimulus. For example, when the vehicle is at the entrance/exit of the aisle and the neighbouring vehicle is close to the same entrance/exit of the aisle, the proximity assessing unit generates a stimulus. On the contrary, when the positions of the vehicle and the neighbouring vehicle are too close to each other, but that the vehicle and the neighbouring vehicle are not present in the same aisle, the proximity assessing unit does not generate a stimulus, thereby preventing the generation of a false collision alarm or warning. For example, when a distance between the positions of the vehicle and the neighbouring vehicle is too small when the vehicle and the neighbouring vehicle are present in the same aisle, the proximity assessing unit generates a stimulus. For example, when the vehicle is at the entrance/exit of the aisle and the neighbouring vehicle is close to the same entrance/exit of the aisle, and when the distance between the vehicle and the neighbouring vehicle is too small, the proximity assessing unit generates a stimulus. On the contrary, when a distance between the vehicle and the neighbouring vehicle is too small, and when the vehicle and the neighbouring vehicle are not present in the same aisle, the proximity assessing unit does not generate a stimulus, thereby preventing the generation of a false collision alarm or warning. For example, when a speed of a vehicle is higher than a speed of a neighboring vehicle, and when both vehicles are present in the same aisle, or when one vehicle is about to exit an aisle into which another one plans to enter, the proximity assessing unit generates a stimulus, thereby striving at preventing collision between the two vehicles. For example, travel speed of the vehicle can be adjusted thanks to aisle wireless tag: a vehicle uses maximum speed in the middle of the aisle and safely decelerates when a stimulus is generated to prevent collision, thereby improving in-aisles control.

According to example embodiments, the aisle wireless tags are RFID tags or Bluetooth tags or any other suitable wireless tag.

This way, the aisle wireless tags may be passive components. No electricity may be required to power feed the aisle wireless tags. The use of RFID tags minimizes deployment costs of the system. Energy costs for the operation of the system are minimized thanks to the use of RFID technology.

According to example embodiments, the wireless vehicle transceiver is further configured to transmit the position of the vehicle in the aisle upon request; and the wireless vehicle transceiver is a RFID tag or a Bluetooth tag.

This way, the wireless vehicle transceiver may transmit the position of the vehicle in the warehouse upon receipt of a request from a neighbouring vehicle, and more particularly in the aisle in which the vehicle is located, to the neighbouring vehicle. For example, the wireless vehicle transceiver advertises the position of the vehicle upon request. Additionally, the fact that the wireless vehicle transceiver transmits the position of the vehicle upon request saves power, battery and computational, for the vehicle. A distance and a speed are only calculated when the vehicle and the neighbouring vehicle are in close proximity.

According to example embodiments, the aisle wireless tags and/or the wireless vehicle transceiver are passive tags.

According to example embodiments, the proximity assessing unit is further configured to determine an orientation of the vehicle with respect to the neighbouring vehicle.

A orientation of a vehicle with respect to a neighbouring vehicle may be determined by the proximity assessing unit. For example, a vehicle may be present in an aisle, and a neighbouring vehicle may be present in the vicinity of the aisle, but not in the aisle. This situation may not necessarily lead to collision if the vehicle is for example moving towards the middle of the aisle instead of towards the exit of the aisle. In this case, the proximity assessing unit will determine that the vehicle is oriented towards the middle of the aisle and not the exit of the aisle, and that the risk of collision of the vehicle with the neighbouring vehicle is low, thereby not generating a stimulus. On the contrary, a vehicle may be present in an aisle, and a neighbouring vehicle may be present in the vicinity of the aisle, but not in the aisle. This situation may lead to collision if the vehicle is for example moving towards the exit of the aisle instead of towards the middle of the aisle. In this case, the proximity assessing unit will determine that the vehicle is oriented towards the middle of the aisle and not the exit of the aisle, and that the risk of collision of the vehicle with the neighbouring vehicle is high, thereby generating a stimulus.

According to example embodiments, the proximity assessing unit is configured to assess the distance and/or the orientation between the vehicle and the neighbouring vehicle from one or more of the following:
- a signal strength of the position of the neighbouring vehicle received by the vehicle;
- a timestamp of reception of the position of the neighbouring vehicle received by the vehicle;
- phase information comprised in the position of the neighbouring vehicle.

This way, the proximity assessing unit can determine the duration since a previous determination of a distance and/or an orientation between the vehicle and the neighbouring vehicle from the timestamp of reception of a previous signal received from the neighbouring vehicle and the timestamp of reception of a new incoming signal received from the neighbouring vehicle.

According to example embodiments, the wireless tag transceiver is further configured to determine a direction of motion of the vehicle in the aisle by receiving the respective tag information of at least two aisle wireless tags.

A direction of motion of a vehicle in an aisle can be determined when combining respective tag information from a first aisle wireless tag and respective tag information from a second aisle wireless tag. Indeed, when the vehicle first receives respective tag information from the first aisle wireless tag, travels further and then receives respective tag information from the second aisle wireless tag, it becomes possible to determine that the vehicle moves from the first aisle wireless tag towards the second aisle wireless tag. Indeed, when the vehicle first receives respective tag information from the second aisle wireless tag, travels further and then receives respective tag information from the first aisle wireless tag, it becomes possible to determine that the vehicle moves from the second aisle wireless tag towards the first aisle wireless tag.

According to example embodiments, the motion of the vehicle in the aisle is three-dimensional.

According to example embodiments, the wireless vehicle transceiver is further configured to transmit the direction of motion of the vehicle in the aisle upon request.

According to example embodiments, the wireless tag transceiver is further configured to determine if the vehicle enters or leaves the aisle.

For example, when the wireless tag transceiver receives respective tag information indicating that the corresponding aisle wireless tag is located at the entrance or the exit of the aisle, the wireless tag transceiver determines that the vehicle enters or leaves the aisle.

According to example embodiments, the proximity assessing unit is further configured to select a type and/or an intensity of the stimulus in function of the distance and/or the direction of motion and/or the orientation of the vehicle with respect to the neighbouring vehicle and/or presence of the vehicle and the neighbouring vehicle in the same aisle and/or a speed of the vehicle relative to a speed of the neighbouring vehicle.

According to example embodiments, a type of the stimulus corresponds to one or more of the following:
- sound;
- light;
- vibration;
- signaling;
- activating a stimulus on another device.

According to the present disclosure, a stimulus is a continuous visual signal. Alternatively, a stimulus is a flashing visual signal, or a periodically blinking visual signal, etc. According to the present disclosure, a stimulus is a continuous audible signal. Alternatively, a stimulus is a beeping audible signal, or a periodically beeping audible signal, etc. According to the present disclosure, a stimulus is a continuous vibrational signal. Alternatively, a stimulus is an intermitted vibrational signal, or a periodic vibrational signal, etc. According to the present disclosure, a stimulus corresponds to the activation of a stimulus from another vehicle such as for example a stimulus of one or more of the neighbouring vehicles. For example, a stimulus can correspond to the generation of an audible stimulus by a neighbouring vehicle, such as a honk, when the neighbouring vehicle is moving at high speed towards the vehicle, thereby trying to warn of a potential collision between the neighbouring vehicle and the vehicle. According to the present disclosure, a stimulus is signaling. For example, the vehicle could broadcast or transmit a data signal or a data message to one or more neighbouring vehicle such as for example a smartphone, or a tablet, or a remote computer or server. Preferably, the signaling can be sent wirelessly. Alternatively, the signaling can be sent through other suitable communication protocols.

According to example embodiments, an intensity of the stimulus corresponds to one or more of the following:
- sound level;
- sound frequency;
- light intensity;
- wavelength;
- light source selection;
- vibration frequency;
- vibration amplitude;
- frequency of signaling;
- content of signaling.

According to example embodiments, the vehicle further comprises a rule engine configured to obtain one or more predetermined rules, wherein each of the predetermined rules defines a correspondence between a type and/or an intensity of the stimulus and a predetermined combination of the distance and/or the orientation, the one or more apparatus parameters and the one or more neighbouring vehicle parameters; and wherein the proximity assessing unit is further configured to select the type and/or the intensity of the stimulus in function of one or more of the predetermined rules.

This way, the predetermined rules are used by the vehicle to select the nature and/or the intensity of the stimulus. For example, a minimum distance can be predetermined for a rotating crane such that a radius can be defined at 360 degrees around the crane in order to constantly determine if there is adequate clearance to prevent collision of the crane with another engine or an operator.

Additionally, the stimulus generated by the system according to the present disclosure is generated depending on parameters of the vehicle and of neighbouring vehicles. This way, the vehicle according to the present disclosure can dynamically generate a stimulus in function of the context faced in real-time by the vehicle, wherein the context is identified by the vehicle from vehicle parameters and neighbouring vehicle parameters. For example, when an ambient noise in the surroundings of the vehicle exceeds a predetermined threshold which makes it hard for a user of the vehicle to hear an audible stimulus, the apparatus may for example select to generate a visual stimulus instead of an audible stimulus and/or the apparatus may for example increase the audible intensity of the audible stimulus. This way, it becomes easier to identify the stimulus generated by the vehicle, which increases safety and improves the relevance and the compatibility of such a vehicle with a larger number of applications. Additionally, the vehicle may for example adapt the intensity of the generated stimulus in function of a context faced in real-time by the vehicle. For example, when the vehicle generates an audible stimulus indicative for a physical distance between the vehicle and at least one neighbouring vehicle, the vehicle can adapt the intensity of the audible stimulus, for example by increasing a volume of the audible stimulus and/or when the audible stimulus is a beep signal by increasing a speed and/or a volume of the beeping signal, in function of the physical distance between the vehicle and at least one neighbouring vehicle. For example, when the physical distance between the vehicle and at least one neighbouring vehicle is larger than a predetermined threshold, then the vehicle generates for example an audible beeping stimulus, and when the physical distance between the vehicle and at least one neighbouring vehicle becomes smaller than the predetermined threshold, the vehicle can accelerate and/or increase the volume of the audible beeping stimulus, thereby alerting a user of the vehicle that the physical distance between the vehicle and at least one neighbouring vehicle is becoming smaller.

With the system according to the present disclosure, the selection of the nature and/or of the intensity of the stimulus generated by the vehicle depends on a combination of a distance and/or orientation, of one or more vehicle parameters and one or more neighbouring vehicle parameters. For example, in the context of the present disclosure, vehicle parameters can comprise a noise level in the vicinity of the vehicle. A noise level corresponds to a volume of ambient noise and other detected sounds in the close surroundings of the vehicle. This noise level may be detected by the vehicle. Alternatively, this noise level may be obtained by the vehicle from for example an external device such as for example a microphone. For example, in the context of the present disclosure, vehicle parameters can comprise an activity level of the vehicle. An activity level corresponds to one or more tasks performed by a user of the vehicle and the level corresponds to an intensity of the activity of the task. For example, if the operator of the vehicle is busy performing one or more tasks sequentially or simultaneously, his attention will be focused on these tasks and less focused on the identification of a stimulus generated by the vehicle. The vehicle must then generate a more intense stimulus and/or a different type of stimulus such as for example a vibrational stimulus to trigger the attention of the user of the vehicle. On the other hand, when a level of activity of the vehicle is low, in other words, when the vehicle is idle or when a corresponding operator does not perform any task, the vehicle can generate an audible stimulus and/or adapt the intensity of the stimulus to a softer level which will trigger the attention of the operator. The vehicle can therefore adapt the type and/or the intensity of the stimulus in real-time in function of this activity level. For example, vehicle parameters can comprise an identifier of the vehicle. An identifier for example comprises a unique identifier tag associated with the vehicle and which allows recognizing the vehicle from other vehicles. The unique identifier tag for example comprises a number and/or a name and/or an identification tag and/or a value, etc. which can uniquely identify the corresponding vehicle. For example, in the context of the present disclosure, vehicle parameters can comprise a user group associated with the vehicle. This way, it becomes possible to associate the vehicles with predetermined identifiers with particular permissions or particular features

According to example embodiments, the proximity assessing unit is further configured to determine a change in the distance and/or in the orientation of the vehicle with respect to the neighbouring vehicle and/or the presence of the vehicle and the neighbouring vehicle in the same aisle and/or in the speed of the vehicle relative to the speed of the neighbouring vehicle; and wherein the proximity assessing unit is further configured to adapt the type and/or the intensity of the stimulus in function of the distance and/or the direction of motion and/or the orientation of the vehicle with respect to the neighbouring vehicle and/or the presence of the vehicle and the neighbouring vehicle in the same aisle.

According to example embodiments, the warehouse comprises a plurality of aisles for storage, wherein the aisles comprise the aisle, and wherein the warehouse further comprises a plurality of cross-aisles, and the proximity assessing unit is further configured not to determine a distance between the vehicle and the neighbouring vehicle when the vehicle and the neighbouring vehicle are not in the same aisle, and the proximity assessing unit is further configured to determine a distance between the vehicle and the neighbouring vehicle when the vehicle is in the aisle and the neighbouring vehicle is not in a neighbouring aisle neighbouring the aisle in the warehouse.

According to example embodiments, the vehicle further comprises a saving unit configured to generate a neighbour table and further configured to store the neighbouring vehicle parameters in the neighbour table.

This way, the neighbour table comprises information indicative for a last distance and/or speed evaluated between the vehicle and the corresponding neighbouring vehicle. The neighbour table comprises for example a time to live indication, which provides information indicative for how long it has been since a discovery signal was received. This way, the vehicle can for example detect if a neighbouring vehicle is no longer in its proximity. Additionally, the neighbour table optionally stores technical information required to communicate efficiently with the neighbouring vehicles. For example, the neighbour table stores the radio frequency of one or more of the neighbouring vehicles. Optionally, the neighbour table stores the modulation format of one or more of the neighbouring vehicles. Additionally, the neighbour table comprises technical information required to efficiently determine a distance and/or a speed with respect to the neighbouring vehicles. For example, the neighbour table comprises orthogonal code, and/or other radio parameters of the neighbouring vehicles.

According to example embodiments, the saving unit is further configured to store in the neighbour table at least one or more of the following:
- the duration since a previous determination of a distance between the vehicle and the neighbouring vehicles and/or an orientation of the vehicle with respect to the neighbouring vehicles;
- the change in distance and/or in orientation determined between the previous determination and the determination by the proximity assessing unit;
- a broadcasting duration since broadcasting a previous discovery signal.

According to example embodiments, the vehicle further comprises an accelerometer configured to determine acceleration data for the vehicle.

The accelerometer is configured to measure a proper acceleration of the vehicle, wherein proper acceleration is the acceleration, i.e. the rate of change of velocity of the vehicle in its own instantaneous rest frame. In other words, the accelerometer is configured to determine a rate of change of velocity of the vehicle.

According to a second example aspect of the present invention, there is provided a computer-implemented method for preventing collision of a vehicle with a neighbouring vehicle in an aisle of a warehouse, wherein the method comprises the steps of:
- arranging a plurality of aisle wireless tags along the aisle, wherein each aisle wireless tag is configured to transceive respective tag information; and
- at the vehicle:
   ∘ providing a wireless tag transceiver configured to receive the respective tag information of one or more aisle wireless tags and to determine a position of the vehicle in the aisle in function of the respective tag information;
   ∘ providing a wireless vehicle transceiver configured to receive a neighbouring position of the neighbouring vehicle; and
   ∘ providing a proximity assessing unit comprising an Ultra-Wide Band interface configured to determine, in function of the position of the vehicle and the neighbouring position of the neighbouring vehicle:
      ▪ a distance between the vehicle and the neighbouring vehicle; and
      ▪ a speed of the vehicle relative to a speed of the neighbouring vehicle; and
      and wherein the proximity assessing unit is further configured to generate a stimulus, in function of the position of the vehicle and the neighbouring position of the neighbouring vehicle, and/or in function of the distance, and/or in function of the speed of the vehicle relative to the speed of the neighbouring vehicle.

With the computer-implemented method according to the present disclosure, a relative position of a vehicle with respect to a position of another vehicle in the same warehouse can be determined and monitored. It becomes possible with the computer-implemented method according to the present disclosure to accurately prevent two vehicles from colliding when both vehicles are in the same aisle of the warehouse. It also becomes with the computer-implemented method according to the present disclosure possible to reliably prevent the generation and the spreading of warnings or alarms falsely indicating imminent or possible collision, for example when two vehicles are close to each other within the warehouse but when the two vehicles are not present in the same aisle. This way, the computer-implemented method according to the present disclosure allows two vehicles to be present in the same aisle of a warehouse while minimizing the risk for accidents to the operators and the vehicles. The computer-implemented method according to the present disclosure prevents an alarm or a warning falsely indicating imminent or possible collision between two vehicles in the same warehouse from being wrongly generated or spread when the two vehicles are close or coming close to each other, while not being present in the same aisle but being present in neighbouring aisles in the warehouse.

The computer-implemented method according to the present disclosure has a large impact on warehouse operations. Indeed, it becomes possible with the computer-implemented method according to the present disclosure to allow two vehicles to work simultaneously in a single aisle of the warehouse. This leads to maximum performance in the warehouse. Efficient access to every pallet in the warehouse for, for example, picking, processing, or retrieval is improved. Speed of access to every pallet in the warehouse for, for example, picking, processing, or retrieval is also improved. It becomes possible to further leverage the height of the building of the warehouse to maximise storage capacity as every pallet in the warehouse can be accessed faster. For example, an increased throughput rate can be achieved as forklifts can move and lift at the same time thanks to the computer-implemented method according to the present disclosure. For example, a pallet can be moved very quickly at considerable height for example in a diagonal direction and at for example high speed without risking colliding with another pallet or another forklift or another operator.

With the computer-implemented method according to the present disclosure, vehicles can quickly and safely move around the aisles of the warehouse, even for example when travelling at full speed, thereby lowering the occurrence of accidents. The safety of the vehicles and most importantly of the operators of the vehicles is greatly improved as collision between two vehicles is prevented, even when the two vehicles are present in the same aisle of the warehouse. The computer-implemented method according to the present disclosure regulates for example a speed of the forklifts according to the weight of the load or restricts the lift heights of the forklifts, thereby optimizing performance while minimizing the accident risk to the operator and/or other operators and/or other vehicles. The computer-implemented method according to the present disclosure helps drivers or operators to carry out their day-to-day tasks more safely by increasing awareness in all the areas they work in such as for example the warehouse, production and loading yard environments. The computer-implemented method according to the present disclosure provides the driver or operator of a vehicle with accurate information about the space behind and to the side of the vehicle, i.e. blind spots and other spaces surrounding the vehicle the driver or operator cannot see. Having this level of visibility significantly increases site safety as well and providing reassurance to the operator of their immediate surroundings. With the computer-implemented method according to the present disclosure, the operators can dynamically managing the drive speed of a vehicle in relation to the level of hazard around the vehicle.

According to a third example aspect of the present invention, there is provided a computer program product comprising computer-executable instructions for causing a system to perform at least the following:
- arranging a plurality of aisle wireless tags along the aisle, wherein each aisle wireless tag is configured to transceive respective tag information; and
- at the vehicle:
   ∘ providing a wireless tag transceiver configured to receive the respective tag information of one or more aisle wireless tags and to determine a position of the vehicle in the aisle in function of the respective tag information;
   ∘ providing a wireless vehicle transceiver configured to receive a neighbouring position of the neighbouring vehicle; and
   ∘ providing a proximity assessing unit comprising an Ultra-Wide Band interface configured to determine, in function of the position of the vehicle and the neighbouring position of the neighbouring vehicle:
      ▪ a distance between the vehicle and the neighbouring vehicle; and
      ▪ a speed of the vehicle relative to a speed of the neighbouring vehicle;
      and wherein the proximity assessing unit is further configured to generate a stimulus, in function of the position of the vehicle and the neighbouring position of the neighbouring vehicle, and/or in function of the distance, and/or in function of the speed of the vehicle relative to the speed of the neighbouring vehicle.

According to a fourth example aspect of the present invention, there is provided a computer readable storage medium comprising computer-executable instructions for performing the following steps when the program is run on a computer:
- arranging a plurality of aisle wireless tags along the aisle, wherein each aisle wireless tag is configured to transceive respective tag information; and
- at the vehicle:
   ∘ providing a wireless tag transceiver configured to receive the respective tag information of one or more aisle wireless tags and to determine a position of the vehicle in the aisle in function of the respective tag information;
   ∘ providing a wireless vehicle transceiver configured to receive a neighbouring position of the neighbouring vehicle; and
   ∘ providing a proximity assessing unit comprising an Ultra-Wide Band interface configured to determine, in function of the position of the vehicle and the neighbouring position of the neighbouring vehicle:
      ▪ a distance between the vehicle and the neighbouring vehicle; and
      ▪ a speed of the vehicle relative to a speed of the neighbouring vehicle;
      and wherein the proximity assessing unit is further configured to generate a stimulus, in function of the position of the vehicle and the neighbouring position of the neighbouring vehicle, and/or in function of the distance, and/or in function of the speed of the vehicle relative to the speed of the neighbouring vehicle.

### Brief Description of the Drawings

Some example embodiments will now be described with reference to the accompanying drawings.
Fig. 1 depicts an example embodiment of a vehicle according to an example embodiment of the present disclosure.
Fig. 2 depicts an example embodiment of a system according to an example embodiment of the present disclosure.
Fig. 3 depicts an example embodiment of a system according to an example embodiment of the present disclosure.
Fig. 4 depicts an example embodiment of a system according to an example embodiment of the present disclosure.
Fig. 5 shows an example embodiment of a suitable computing system for performing one or several steps in embodiments of the invention.

### Detailed Description of Embodiment(s)

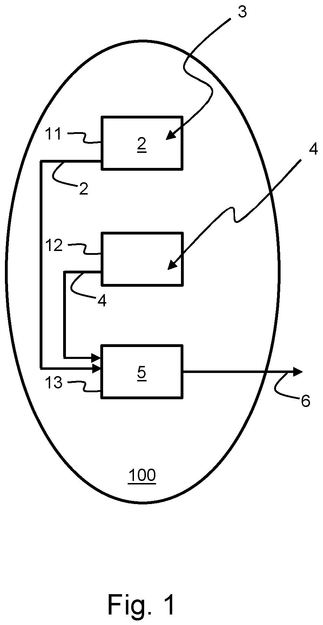

Fig. 1 illustrates an example embodiment of a vehicle 100 according to the present disclosure in an aisle of a warehouse. The vehicle 100 comprises a wireless tag transceiver 11, a wireless vehicle transceiver 12, and a proximity assessing unit

13. The wireless tag transceiver 11 receives respective tag information 3 of one or more aisle wireless tags and determines a position 2 of the vehicle 100 in the aisle of the warehouse in function of the respective tag information 3. The wireless vehicle transceiver 12 receives a neighbouring position 4 of a neighbouring vehicle. The proximity assessing unit 13 comprises an Ultra-Wide Band interface configured to determine, in function of the position 2 of the vehicle 100 and the neighbouring position 4 of the neighbouring vehicle: a distance 5 between the vehicle 100 and the neighbouring vehicle and a speed of the vehicle 100 relative to a speed of the neighbouring vehicle. The proximity assessing unit 13 is further configured to generate a stimulus 6 in function of the position 2 of the vehicle 100 and the neighbouring position 4, and/or in function of the distance 5, and/or in function of the speed of the vehicle 100 relative to the speed of the neighbouring vehicle.

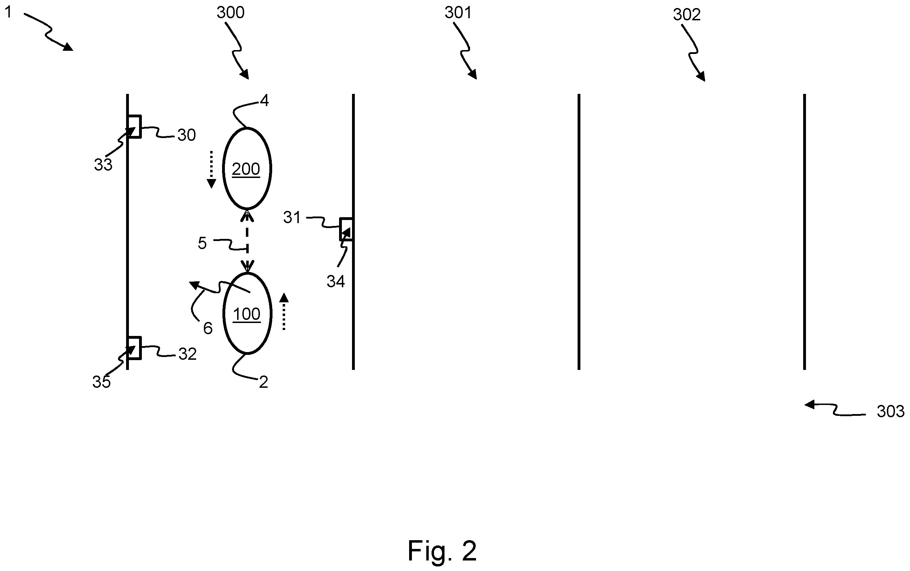

Fig. 2 illustrates an example embodiment of a system 1 for preventing collision of a vehicle 100 with a neighbouring vehicle 200 in an aisle 300 of a warehouse comprising at least three aisles 300;301;302. Components having identical reference numbers as in Fig. 1 fulfill the same function. The aisle 300 comprises a plurality of aisle wireless tags 30;31;32 arranged along the aisle 300. Each aisle wireless tag 30;31;32 is configured to transceiver respective tag information 3, labelled 33 related to the aisle wireless tag 30, labelled 34 related to the aisle wireless tag 31, labelled 35 related to the aisle wireless tag 32. The vehicle 100 according to the present disclosure in the aisle 300 of the warehouse. The vehicle 200 is in the aisle 300 of the warehouse. The vehicle 100 comprises a wireless tag transceiver 11, a wireless vehicle transceiver 12, and a proximity assessing unit 13. The wireless tag transceiver 11 receives respective tag information, labelled 33;34;35, of one or more of the aisle wireless tags 30;31;32 and determines a position 2 of the vehicle 100 in the aisle of the warehouse in function of the respective tag information, labelled 33;34;35. The wireless vehicle transceiver 12 receives a neighbouring position 4 of a neighbouring vehicle 200. The proximity assessing unit 13 comprises an Ultra-Wide Band interface configured to determine, in function of the position 2 of the vehicle 100 and the neighbouring position 4 of the neighbouring vehicle 200: a distance 5 between the vehicle 100 and the neighbouring vehicle 200 and a speed of the vehicle 100 relative to a speed of the neighbouring vehicle 200. The proximity assessing unit 13 is further configured to generate a stimulus 6 in function of the position 2 of the vehicle 100 and the neighbouring position 4, and/or in function of the distance 5, and/or in function of the speed of the vehicle 100 relative to the speed of the neighbouring vehicle 200. The wireless vehicle transceiver 12 is configured to transmit the position 2 of the vehicle 100 in the aisle 300 upon request. The wireless vehicle transceiver 12 is a RFID tag or a Bluetooth tag. The aisle wireless tags 30;31;32 and/or the wireless vehicle transceiver 12 are passive tags. The proximity assessing unit 13 is further configured to determine an orientation of the vehicle 100 with respect to the neighbouring vehicle 200. The wireless tag transceiver 11 is further configured to determine a direction of motion of the vehicle 100 in the aisle 300 by receiving the respective tag information of at least two of the aisle wireless tags 30;31;32. The motion of the vehicle 100 in the aisle 300 is three-dimensional. The wireless vehicle transceiver 12 is further configured to transmit the direction of motion of the vehicle 100 in the aisle 300 upon request. The wireless tag transceiver 11 is further configured to determine if the vehicle 100 enters or leaves the aisle 300. The proximity assessing unit 13 is further configured to select a type and/or an intensity of the stimulus 6 in function of the distance 5 and/or the direction of motion and/or the orientation of the vehicle 100 with respect to the neighbouring vehicle 200 and/or presence of the vehicle 100 and the neighbouring vehicle 200 in the same aisle 300 and/or a speed of the vehicle 100 relative to a speed of the neighbouring vehicle 200.The proximity assessing unit 13 is further configured to determine a change in the distance 5 and/or in the orientation of the vehicle 100 with respect to the neighbouring vehicle 200 and/or presence of the vehicle 100 and the neighbouring vehicle 200 in the same aisle 300 and/or a speed of the vehicle 100 relative to a speed of the neighbouring vehicle 200. The proximity assessing unit 13 is further configured to adapt the type and/or the intensity of the stimulus 6 in function of the distance 5 and/or the direction of motion and/or the orientation of the vehicle 100 with respect to the neighbouring vehicle 200 and/or presence of the vehicle 100 and the neighbouring vehicle 200 in the same aisle 300 and/or a speed of the vehicle 100 relative to a speed of the neighbouring vehicle 200. The warehouse comprises a plurality of aisles for storage and a plurality of cross-aisles 303. The proximity assessing unit 13 does not determine a distance 5 between the vehicle 100 and the neighbouring vehicle 200 when the vehicle 100 and the neighbouring vehicle 200 are not in the same aisle 300. The proximity assessing unit 13 determines a distance 5 between the vehicle 100 and the neighbouring vehicle 200 when the vehicle 100 is in the aisle 300 and the neighbouring vehicle 200 is not in a neighbouring aisle neighbouring the aisle 300 of the warehouse, for example when the neighbouring vehicle 200 is in the cross-aisle 303 while the vehicle 100 is in the aisle 300. In Fig. 2, the vehicle 100 and the neighbouring vehicle 200 are in the same aisle 300. The proximity assessing unit 13 determines a distance 5 between the vehicle 100 and the neighbouring vehicle 200. The proximity assessing unit 13 determines a speed of the vehicle 100 relative to the speed of the neighbouring vehicle 200. In function of the position 2 of the vehicle 100 and the neighbouring position 4, and/or in function of the distance 5, and/or in function of the speed of the vehicle 100 relative to the speed of the neighbouring vehicle 200, the proximity assessing unit 13 determines there is a risk of collision between the vehicle 100 and the neighbouring vehicle 200. For example, the vehicle 100 and the neighbouring vehicle 200 are too close to each other, i.e. the distance 5 is smaller than an acceptable distance between two vehicles. Alternatively, the speed of the neighbouring vehicle 200 is larger than the speed of the vehicle 100. Alternatively, the speed of the neighbouring vehicle 200 is larger than the speed of the vehicle 100, and the vehicle 100 and the neighbouring vehicle 200 are too close to each other, i.e. the distance 5 is smaller than an acceptable distance between two vehicles. The proximity assessing unit 13 therefore generates the stimulus 6 in each situation to prevent collision.

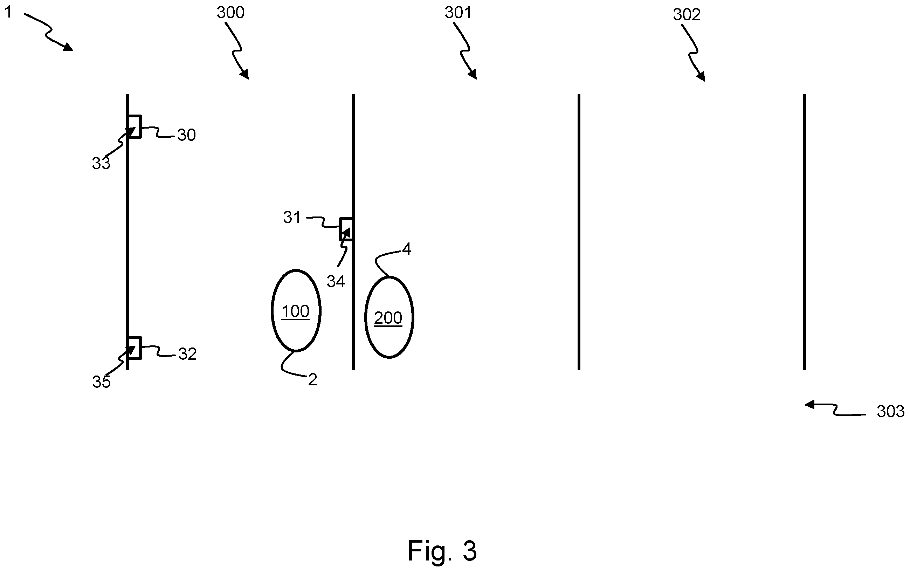

Fig. 3 illustrates an example embodiment of a system 1 for preventing collision of a vehicle 100 with a neighbouring vehicle 200 in an aisle 300 of a warehouse comprising at least three aisles 300;301;302. Components having identical reference numbers as in Fig. 1 fulfill the same function. The aisle 300 comprises a plurality of aisle wireless tags 30;31;32 arranged along the aisle 300. Each aisle wireless tag 30;31;32 is configured to transceiver respective tag information 3, labelled 33 related to the aisle wireless tag 30, labelled 34 related to the aisle wireless tag 31, labelled 35 related to the aisle wireless tag 32. The vehicle 100 according to the present disclosure in the aisle 300 of the warehouse. The vehicle 200 is in the aisle 300 of the warehouse. The vehicle 100 comprises a wireless tag transceiver 11, a wireless vehicle transceiver 12, and a proximity assessing unit 13. The wireless tag transceiver 11 receives respective tag information, labelled 33;34;35, of one or more of the aisle wireless tags 30;31;32 and determines a position 2 of the vehicle 100 in the aisle of the warehouse in function of the respective tag information, labelled 33;34;35. The wireless vehicle transceiver 12 receives a neighbouring position 4 of a neighbouring vehicle 200. The proximity assessing unit 13 comprises an Ultra-Wide Band interface configured to determine, in function of the position 2 of the vehicle 100 and the neighbouring position 4 of the neighbouring vehicle 200: a distance 5 between the vehicle 100 and the neighbouring vehicle 200 and a speed of the vehicle 100 relative to a speed of the neighbouring vehicle 200. The proximity assessing unit 13 is further configured to generate a stimulus 6 in function of the position 2 of the vehicle 100 and the neighbouring position 4, and/or in function of the distance 5, and/or in function of the speed of the vehicle 100 relative to the speed of the neighbouring vehicle 200. The wireless vehicle transceiver 12 is configured to transmit the position 2 of the vehicle 100 in the aisle 300 upon request. The wireless vehicle transceiver 12 is a RFID tag or a Bluetooth tag. The aisle wireless tags 30;31;32 and/or the wireless vehicle transceiver 12 are passive tags. The proximity assessing unit 13 is further configured to determine an orientation of the vehicle 100 with respect to the neighbouring vehicle 200. The wireless tag transceiver 11 is further configured to determine a direction of motion of the vehicle 100 in the aisle 300 by receiving the respective tag information of at least two of the aisle wireless tags 30;31;32. The motion of the vehicle 100 in the aisle 300 is three-dimensional. The wireless vehicle transceiver 12 is further configured to transmit the direction of motion of the vehicle 100 in the aisle 300 upon request. The wireless tag transceiver 11 is further configured to determine if the vehicle 100 enters or leaves the aisle 300. The proximity assessing unit 13 is further configured to select a type and/or an intensity of the stimulus 6 in function of the distance 5 and/or the direction of motion and/or the orientation of the vehicle 100 with respect to the neighbouring vehicle 200 and/or presence of the vehicle 100 and the neighbouring vehicle 200 in the same aisle 300 and/or a speed of the vehicle 100 relative to a speed of the neighbouring vehicle 200.The proximity assessing unit 13 is further configured to determine a change in the distance 5 and/or in the orientation of the vehicle 100 with respect to the neighbouring vehicle 200 and/or presence of the vehicle 100 and the neighbouring vehicle 200 in the same aisle 300 and/or a speed of the vehicle 100 relative to a speed of the neighbouring vehicle 200. The proximity assessing unit 13 is further configured to adapt the type and/or the intensity of the stimulus 6 in function of the distance 5 and/or the direction of motion and/or the orientation of the vehicle 100 with respect to the neighbouring vehicle 200 and/or presence of the vehicle 100 and the neighbouring vehicle 200 in the same aisle 300 and/or a speed of the vehicle 100 relative to a speed of the neighbouring vehicle 200. The warehouse comprises a plurality of aisles for storage and a plurality of cross-aisles 303. The proximity assessing unit 13 does not determine a distance 5 between the vehicle 100 and the neighbouring vehicle 200 when the vehicle 100 and the neighbouring vehicle 200 are not in the same aisle 300. The proximity assessing unit 13 determines a distance 5 between the vehicle 100 and the neighbouring vehicle 200 when the vehicle 100 is in the aisle 300 and the neighbouring vehicle 200 is not in a neighbouring aisle neighbouring the aisle 300 of the warehouse, for example when the neighbouring vehicle 200 is in the cross-aisle 303 while the vehicle 100 is in the aisle 300. In Fig. 3, the vehicle 100 and the neighbouring vehicle 200 are not in the same aisle 300. The neighbouring vehicle 200 is in the aisle 301 while the vehicle is in the aisle 300. The wireless vehicle transceiver 12 identifies that the vehicle 100 and the neighbouring vehicle 200 are not in the same aisle 300. The proximity assessing unit 13 does not determine a distance 5 between the vehicle 100 and the neighbouring vehicle 200. The proximity assessing unit 13 does not determine a speed of the vehicle 100 relative to the speed of the neighbouring vehicle 200. Even though the vehicle 100 and the neighbouring vehicle 200 are physically close to each other in the warehouse, i.e. a distance between the vehicle 100 and the neighbouring vehicle 200 is small, the proximity assessing unit 13 does not generate a stimulus as there is no risk of collision between the vehicle 100 and the neighbouring vehicle 200.

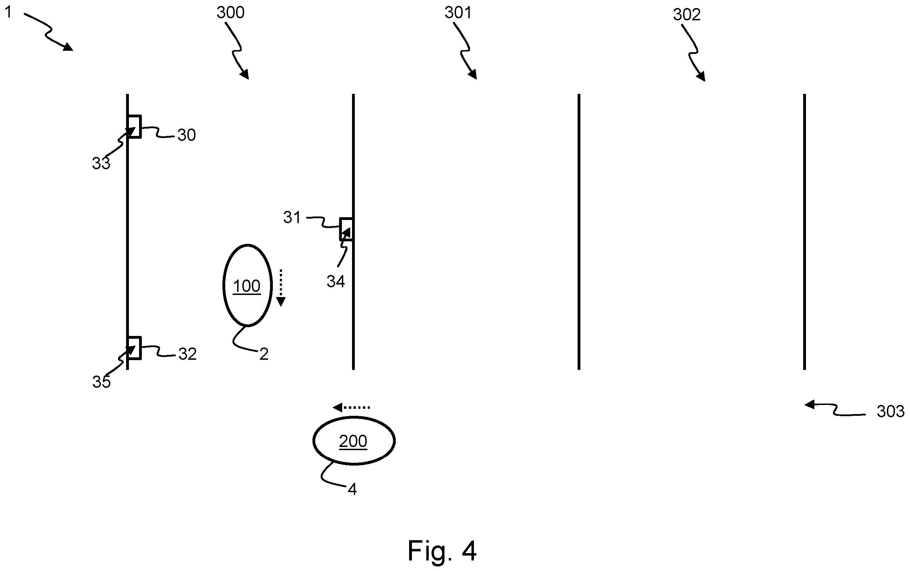

Fig. 4 illustrates an example embodiment of a system 1 for preventing collision of a vehicle 100 with a neighbouring vehicle 200 in an aisle 300 of a warehouse comprising at least three aisles 300;301;302. Components having identical reference numbers as in Fig. 1 fulfill the same function. The aisle 300 comprises a plurality of aisle wireless tags 30;31;32 arranged along the aisle 300. Each aisle wireless tag 30;31;32 is configured to transceiver respective tag information 3, labelled 33 related to the aisle wireless tag 30, labelled 34 related to the aisle wireless tag 31, labelled 35 related to the aisle wireless tag 32. The vehicle 100 according to the present disclosure in the aisle 300 of the warehouse. The vehicle 200 is in the aisle 300 of the warehouse. The vehicle 100 comprises a wireless tag transceiver 11, a wireless vehicle transceiver 12, and a proximity assessing unit 13. The wireless tag transceiver 11 receives respective tag information, labelled 33;34;35, of one or more of the aisle wireless tags 30;31;32 and determines a position 2 of the vehicle 100 in the aisle of the warehouse in function of the respective tag information, labelled 33;34;35. The wireless vehicle transceiver 12 receives a neighbouring position 4 of a neighbouring vehicle 200. The proximity assessing unit 13 comprises an Ultra-Wide Band interface configured to determine, in function of the position 2 of the vehicle 100 and the neighbouring position 4 of the neighbouring vehicle 200: a distance 5 between the vehicle 100 and the neighbouring vehicle 200 and a speed of the vehicle 100 relative to a speed of the neighbouring vehicle 200. The proximity assessing unit 13 is further configured to generate a stimulus 6 in function of the position 2 of the vehicle 100 and the neighbouring position 4, and/or in function of the distance 5, and/or in function of the speed of the vehicle 100 relative to the speed of the neighbouring vehicle 200. The wireless vehicle transceiver 12 is configured to transmit the position 2 of the vehicle 100 in the aisle 300 upon request. The wireless vehicle transceiver 12 is a RFID tag or a Bluetooth tag. The aisle wireless tags 30;31;32 and/or the wireless vehicle transceiver 12 are passive tags. The proximity assessing unit 13 is further configured to determine an orientation of the vehicle 100 with respect to the neighbouring vehicle 200. The wireless tag transceiver 11 is further configured to determine a direction of motion of the vehicle 100 in the aisle 300 by receiving the respective tag information of at least two of the aisle wireless tags 30;31;32. The motion of the vehicle 100 in the aisle 300 is three-dimensional. The wireless vehicle transceiver 12 is further configured to transmit the direction of motion of the vehicle 100 in the aisle 300 upon request. The wireless tag transceiver 11 is further configured to determine if the vehicle 100 enters or leaves the aisle 300. The proximity assessing unit 13 is further configured to select a type and/or an intensity of the stimulus 6 in function of the distance 5 and/or the direction of motion and/or the orientation of the vehicle 100 with respect to the neighbouring vehicle 200 and/or presence of the vehicle 100 and the neighbouring vehicle 200 in the same aisle 300 and/or a speed of the vehicle 100 relative to a speed of the neighbouring vehicle 200.The proximity assessing unit 13 is further configured to determine a change in the distance 5 and/or in the orientation of the vehicle 100 with respect to the neighbouring vehicle 200 and/or presence of the vehicle 100 and the neighbouring vehicle 200 in the same aisle 300 and/or a speed of the vehicle 100 relative to a speed of the neighbouring vehicle 200. The proximity assessing unit 13 is further configured to adapt the type and/or the intensity of the stimulus 6 in function of the distance 5 and/or the direction of motion and/or the orientation of the vehicle 100 with respect to the neighbouring vehicle 200 and/or presence of the vehicle 100 and the neighbouring vehicle 200 in the same aisle 300 and/or a speed of the vehicle 100 relative to a speed of the neighbouring vehicle 200. The warehouse comprises a plurality of aisles for storage and a plurality of cross-aisles 303. The proximity assessing unit 13 determines a distance 5 between the vehicle 100 and the neighbouring vehicle 200 when the vehicle 100 is in the aisle 300 and the neighbouring vehicle 200 is not in a neighbouring aisle neighbouring the aisle 300 of the warehouse, for example when the neighbouring vehicle 200 is in the cross-aisle 303 while the vehicle 100 is in the aisle 300. In Fig. 4, the vehicle 100 and the neighbouring vehicle 200 are not in the same aisle 300. The neighbouring vehicle 200 is in the aisle 301 while the vehicle is in the cross-aisle 303. The wireless vehicle transceiver 12 identifies that the vehicle 100 and the neighbouring vehicle 200 are not in the same aisle 300. The proximity assessing unit 13 determines a distance 5 between the vehicle 100 and the neighbouring vehicle 200. The proximity assessing unit 13 determines a speed of the vehicle 100 relative to the speed of the neighbouring vehicle 200. The proximity assessing unit 13 does not generate a stimulus as there is no risk of collision between the vehicle 100 and the neighbouring vehicle 200. Once the wireless tag transceiver 11 of the vehicle 100 receives the respective tag information 35 from the aisle wireless tag 32, after having received the respective tag information 34 from the aisle wireless tag 31, the wireless tag transceiver 11 determines that the vehicle 100 is leaving the aisle 300. The wireless vehicle transceiver 12 then receives a neighbouring position 4 of the neighbrouing vehicle 200, which is coming closer to the entrance/exit of the aisle 300. The proximity assessing unit 13 then determines a distance 5 between the vehicle 100 and the neighbouring vehicle 200. The proximity assessing unit 13 determines a speed of the vehicle 100 relative to the speed of the neighbouring vehicle 200. In function of the position 2 of the vehicle 100 and the neighbouring position 4, and/or in function of the distance 5, and/or in function of the speed of the vehicle 100 relative to the speed of the neighbouring vehicle 200, the proximity assessing unit 13 determines there is a risk of collision between the vehicle 100 and the neighbouring vehicle 200. For example, the vehicle 100 and the neighbouring vehicle 200 are too close to each other, i.e. the distance 5 is smaller than an acceptable distance between two vehicles. Alternatively, the speed of the neighbouring vehicle 200 is larger than the speed of the vehicle 100. Alternatively, the speed of the neighbouring vehicle 200 is larger than the speed of the vehicle 100, and the vehicle 100 and the neighbouring vehicle 200 are too close to each other, i.e. the distance 5 is smaller than an acceptable distance between two vehicles. The proximity assessing unit 13 therefore generates the stimulus 6 in each situation to prevent collision.

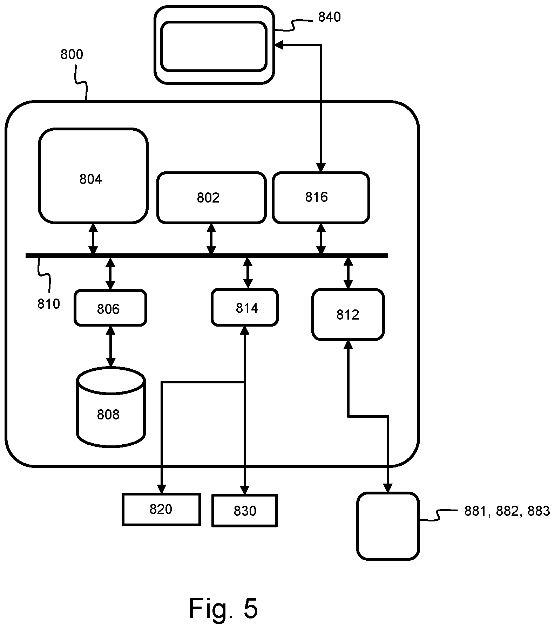

Fig. 5 shows a suitable computing system 800 enabling to implement embodiments of the system. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 881, 882, 883. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. It is noticed that the entire computer-implemented method according to the present invention can be executed centralized, e.g. on a server in a management center or in a cloud system, or it can be partially executed on a remote electronic device, e.g. worn by the user, and partially on a central server. Computing system 800 could thus correspond to the system available centrally or the processing system available in the electronic device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (1) for preventing collision of a vehicle (100) with a neighbouring vehicle (200) in an aisle (300) of a warehouse, the system (1) comprising:
- a plurality of aisle wireless tags (30;31;32) arranged along the aisle (300), wherein each aisle wireless tag (30;31;32) is configured to transceive respective tag information (3); and
- at the vehicle (100):
∘ a wireless tag transceiver (11) configured to receive the respective tag information (3) of one or more aisle wireless tags (30;31;32) and to determine a position (2) of the vehicle in the aisle (300) in function of the respective tag information (3);
∘ a wireless vehicle transceiver (12) configured to receive a neighbouring position (4) of the neighbouring vehicle (200); and
∘ a proximity assessing unit (13) comprising an Ultra-Wide Band interface configured to determine, in function of the position (2) of the vehicle (100) and the neighbouring position (4) of the neighbouring vehicle (200):
▪ a distance (5) between the vehicle (100) and the neighbouring vehicle (200); and
▪ a speed of the vehicle (100) relative to a speed of the neighbouring vehicle (200); and
wherein the proximity assessing unit (13) is further configured to generate a stimulus (6), in function of the position (2) of the vehicle (100) and the neighbouring position (4) of the neighbouring vehicle (200), and/or in function of the distance (5), and/or in function of the speed of the vehicle (100) relative to the speed of the neighbouring vehicle (200).

2. The system (1) according to claim 1, wherein the aisle wireless tags (30;31;32) are RFID tags or Bluetooth tags or any other suitable wireless tag.

3. The system (1) according to any of the preceding claims, wherein the wireless vehicle transceiver (12) is further configured to transmit the position (2) of the vehicle in the aisle (300) upon request; wherein the wireless vehicle transceiver (12) is a RFID tag or a Bluetooth tag.

4. The system (1) according to claim 3, wherein the aisle wireless tags (30;31;32) and/or the wireless vehicle transceiver (12) are passive tags.

5. The system (1) according to any of the preceding claims, wherein the proximity assessing unit (13) is further configured to determine an orientation of the vehicle (100) with respect to the neighbouring vehicle (200).

6. The system (1) according to any of the preceding claims, wherein the wireless tag transceiver (11) is further configured to determine a direction of motion of the vehicle (100) in the aisle (300) by receiving the respective tag information (3) of at least two aisle wireless tags (30;31;32).

7. The system (1) according to claim 6, wherein the motion of the vehicle (100) in the aisle (300) is three-dimensional.

8. The system (1) according to claim 6 or 7, wherein the wireless vehicle transceiver (12) is further configured to transmit the direction of motion of the vehicle (100) in the aisle (300) upon request.

9. The system (1) according to claim 6 or 7 or 8, wherein the wireless tag transceiver (11) is further configured to determine if the vehicle (100) enters or leaves the aisle (300).

10. The system (1) according to claim 5 and any of the claims 6 to 9, wherein the proximity assessing unit (13) is further configured to select a type and/or an intensity of the stimulus (6) in function of the distance (5) and/or the direction of motion and/or the orientation of the vehicle (100) with respect to the neighbouring vehicle (200) and/or presence of the vehicle (100) and the neighbouring vehicle (200) in the same aisle (300) and/or a speed of the vehicle (100) relative to a speed of the neighbouring vehicle (200).

11. The system (1) according to claim 10, wherein the proximity assessing unit (13) is further configured to determine a change in the distance (5) and/or in the orientation of the vehicle with respect to the neighbouring vehicle (200) and/or the presence of the vehicle (100) and the neighbouring vehicle (200) in the same aisle (300) and/or in the speed of the vehicle (100) relative to the speed of the neighbouring vehicle (200); and wherein the proximity assessing unit (13) is further configured to adapt the type and/or the intensity of the stimulus (6) in function of the distance (5) and/or the direction of motion and/or the orientation of the vehicle (100) with respect to the neighbouring vehicle (200) and/or the presence of the vehicle (100) and the neighbouring vehicle (200) in the same aisle (300).

12. The system (1) according to any of the preceding claims, wherein the warehouse comprises a plurality of aisles for storage, wherein the aisles comprise the aisle (300), and wherein the warehouse further comprises a plurality of cross-aisles; and wherein the proximity assessing unit (13) is further configured not to determine a distance (5) between the vehicle (100) and the neighbouring vehicle (200) when the vehicle (100) and the neighbouring vehicle (200) are not in the same aisle (300); and wherein the proximity assessing unit (13) is further configured to determine a distance (5) between the vehicle (100) and the neighbouring vehicle (200) when the vehicle (100) is in the aisle (300) and the neighbouring vehicle (200) is not in a neighbouring aisle neighbouring the aisle (300) in the warehouse.

13. A computer-implemented method for preventing collision of a vehicle (100) with a neighbouring vehicle (200) in an aisle (300) of a warehouse, wherein the method comprises the steps of:
- arranging a plurality of aisle wireless tags (30;31;32) along the aisle (300), wherein each aisle wireless tag (30;31;32) is configured to transceive respective tag information (3); and
- at the vehicle (100):
∘ providing a wireless tag transceiver (11) configured to receive the respective tag information (3) of one or more aisle wireless tags (30;31;32) and to determine a position (2) of the vehicle in the aisle (300) in function of the respective tag information (3);
∘ providing a wireless vehicle transceiver (12) configured to receive a neighbouring position (4) of the neighbouring vehicle (200); and
∘ providing a proximity assessing unit (13) comprising an Ultra-Wide Band interface configured to determine, in function of the position (2) of the vehicle (100) and the neighbouring position (4) of the neighbouring vehicle (200):
▪ a distance (5) between the vehicle and the neighbouring vehicle; and
▪ a speed of the vehicle (100) relative to a speed of the neighbouring vehicle (200); and
and wherein the proximity assessing unit (13) is further configured to generate a stimulus (6), in function of the position (2) of the vehicle and the neighbouring position (4) of the neighbouring vehicle (200), and/or in function of the distance (5), and/or in function of the speed of the vehicle (100) relative to the speed of the neighbouring vehicle (200).

14. A computer program product comprising computer-executable instructions for causing a system (1) to perform at least the following:
- arranging a plurality of aisle wireless tags (30;31;32) along the aisle (300), wherein each aisle wireless tag (30;31;32) is configured to transceive respective tag information (3); and
- at the vehicle (100):
∘ providing a wireless tag transceiver (11) configured to receive the respective tag information (3) of one or more aisle wireless tags (30;31;32) and to determine a position (2) of the vehicle in the aisle (300) in function of the respective tag information (3);
∘ providing a wireless vehicle transceiver (12) configured to receive a neighbouring position (4) of the neighbouring vehicle (200); and
∘ providing a proximity assessing unit (13) comprising an Ultra-Wide Band interface configured to determine, in function of the position (2) of the vehicle (100) and the neighbouring position (4) of the neighbouring vehicle (200):
▪ a distance (5) between the vehicle and the neighbouring vehicle; and
▪ a speed of the vehicle (100) relative to a speed of the neighbouring vehicle (200);
and wherein the proximity assessing unit (13) is further configured to generate a stimulus (6), in function of the position (2) of the vehicle and the neighbouring position (4) of the neighbouring vehicle (200), and/or in function of the distance (5), and/or in function of the speed of the vehicle (100) relative to the speed of the neighbouring vehicle (200).

15. A computer readable storage medium comprising computer-executable instructions for performing the following steps when the program is run on a computer:
- arranging a plurality of aisle wireless tags (30;31;32) along the aisle (300), wherein each aisle wireless tag (30;31;32) is configured to transceive respective tag information (3); and
- at the vehicle (100):
∘ providing a wireless tag transceiver (11) configured to receive the respective tag information (3) of one or more aisle wireless tags (30;31;32) and to determine a position (2) of the vehicle in the aisle (300) in function of the respective tag information (3);
∘ providing a wireless vehicle transceiver (12) configured to receive a neighbouring position (4) of the neighbouring vehicle (200); and
∘ providing a proximity assessing unit (13) comprising an Ultra-Wide Band interface configured to determine, in function of the position (2) of the vehicle (100) and the neighbouring position (4) of the neighbouring vehicle (200):
▪ a distance (5) between the vehicle and the neighbouring vehicle; and
▪ a speed of the vehicle (100) relative to a speed of the neighbouring vehicle (200);
and wherein the proximity assessing unit (13) is further configured to generate a stimulus (6), in function of the position (2) of the vehicle and the neighbouring position (4) of the neighbouring vehicle (200), and/or in function of the distance (5), and/or in function of the speed of the vehicle (100) relative to the speed of the neighbouring vehicle (200).
